Europäisches Patentamt

**European Patent Office**

Office européen des brevets

(11) Veröffentlichungsnummer: **0 004 381**
**B1**

(12) **EUROPÄISCHE PATENTSCHRIFT**

(45) Veröffentlichungstag der Patentschrift:
**16.12.81**

(21) Anmeldenummer: **79100879.0**

(22) Anmeldetag: **23.03.79**

(51) Int. Cl.³: **B 60 P 7/13**

(54) **Container-Befestigungsvorrichtung.**

(30) Priorität: **25.03.78 DE 2813210**

(43) Veröffentlichungstag der Anmeldung:
**03.10.79 Patentblatt 79/20**

(45) Bekanntmachung des Hinweises auf die Patenterteilung:
**16.12.81 Patentblatt 81/50**

(84) Benannte Vertragsstaaten:
**BE FR GB IT NL**

(56) Entgegenhaltungen:
**DE-A-2 305 001**
**DE-C-1 936 779**
**FR-A-1 585 077**
**GB-A-1 283 795**

(73) Patentinhaber: **WIHAG Nutzfahrzeugtechnik Gesellschaft mit beschränkter Haftung & Co. Kommanditgesellschaft, Artur-Ladebeck-Strasse 171, D-4800 Bielefeld 14 (DE)**

(72) Erfinder: **Thiele, Wilhelm, Beim Struckenberge 11, D-2800 Bremen 21 (DE)**

(74) Vertreter: **Loesenbeck, Otto, Dr. et al, Dr. Loesenbeck . Dipl.-Ing. Stracke . Dipl.-Ing. Loesenbeck Patentanwälte Postfach 5605 Herforder Strasse 17, D-4800 Bielefeld 1 (DE)**

## Container-Befestigungsvorrichtung

Die Erfindung bezieht sich auf eine Container-Befestigungsvorrichtung mit einem Gehäuse, das eine Aufstandsfläche für einen Eckbeschlag eines Containers aufweist, mit einem Durchbruch in der Aufstandsfläche, in den ein unverdrehbar gehaltenes und von einer im Gehäuse bewegbaren Abstützung tragbares Widerlager eingreift, welches seinerseits von einem um seine Längsachse verdrehbaren Riegelbolzen durchsetzt und zusammen mit diesem in axialer Richtung unter die Aufstandsfläche bis gegen einen Anschlag absenkbar ist.

Es ist eine Container-Befestigungsvorrichtung dieser Art bekannt (DE-OS 2 305 001), bei der die Abstützung als im Gehäuse drehbar gelagerte, runde Platte ausgebildet ist, die eine der Kontur des Widerlagers entsprechende Durchbrechung aufweist und mit einem Handgriff versehen ist. Zur Drehlagerung sind der Mantelfläche der Platte um vertikale Achsen drehbare Rollen oder in das Gehäuse eingesetzte Führungsstifte zugeordnet. Zur Festlegung der Führungsstifte und auch der Zapfen, auf denen die Rollen drehbar gelagert sind, müssen in das Gehäuse Bohrungen eingebracht werden, so daß entsprechend hohe Fertigungs- und Montagekosten entstehen.

Es ist ferner eine Container-Befestigungsvorrichtung bekannt (GB-PS 1 283 795), bei der der Spannkopf des Riegelbolzens zusammen mit dem zugeordneten Widerlager bis unter die Aufstandsfläche abgesenkt werden kann. Die Abstützung für das Widerlager in der Betriebsstellung der Befestigungsvorrichtung ist U-förmig ausgebildet und weist Seitenschenkel und einen Bodensteg auf. Das Widerlager muß mit einer Aussparung ausgerüstet werden, damit es in der abgesenkten Stellung den Bodensteg umgreifen und auf dem Gehäuseboden aufliegen kann. Der Riegelbolzen weist kein Außengewinde und keine Spannmutter auf, so daß der Eckbeschlag des Containers in der gekoppelten Stellung nicht durch eine Spannmutter fest gegen die Aufstandsfläche der Befestigungsvorrichtung gezogen werden kann.

Der Erfindung liegt die Aufgabe zugrunde, eine Container-Befestigungsvorrichtung der eingangs genannten Art so zu gestalten, daß sie leicht herstellbar und bequem bedienbar ist, jedoch das bekannte Prinzip beibehält, in ihrem einen Zustand das Widerlager des Spannkopfes des Riegelbolzens in der angehobenen Stellung zu verriegeln und in ihrer anderen Stellung ein Absenken des Widerlagers zu erlauben.

Erfindungsgemäß wird diese Aufgabe dadurch gelöst, daß die Abstützung aus einer horizontal im Gehäuse angeordneten Greiferzange besteht, deren Greifelemente relativ zueinander aus einer Trag- in eine Absenkstellung bewegbar sind, in der ihr lichter Abstand eine das Absenken des Widerlagers gestattende Größe hat.

Mit einer derartigen Abstützung wird nicht nur die gestellte Aufgabe erfüllt, vielmehr läßt sich bei einer solchen Greiferzange auch jederzeit der Betriebszustand der Abstützung erkennen, d. h. ob sie geschlossen oder geöffnet ist.

Bei einer bevorzugten Ausführungsform sind zwei Greifelemente vorgesehen, welche sich beim Öffnen und Schließen gegenläufig um separate vertikale Achsen verdrehen lassen. Vorzugsweise sind die Greifelemente durch eine Mitnehmerkupplung miteinander verbunden.

Vorteilhafterweise kann der eine Schenkel der Greifelemente so geformt sein, daß der von den Greifelementen in ihrer geöffneten Stellung umschlossene Profilraum im wesentlichen mit dem lotrechten Durchbruch in der Aufstandsfläche übereinstimmt.

Ferner kann es vorteilhaft sein, die Greifelemente in ihrer der angehobenen Stellung des Widerlagers entsprechenden Stellung zu verriegeln. Hierfür können die Greifelemente durch eine Feder in Richtung ihrer Tragstellung vorgespannt sein.

Eines der Greifelemente kann mit einem Handgriff versehen sein.

Nachstehend wird ein bevorzugtes Ausführungsbeispiel der Erfindung unter Bezugnahme auf eine Zeichnung näher erläutert. Darin zeigt

Fig. 1 eine perspektivische Darstellung der Container-Befestigungsvorrichtung mit angehobenem Widerlager und dementsprechend geschlossener Greiferzange,

Fig. 2 eine Draufsicht auf die Befestigungsvorrichtung bei geöffneter Greiferzange und fehlendem Widerlager,

Fig. 3 eine teilweise geschnittene Seitenansicht des zur Befestigungsvorrichtung gehörigen Widerlagers, und

Fig. 4 einen Teilschnitt im Verlauf einer Linie IV-IV von Fig. 2.

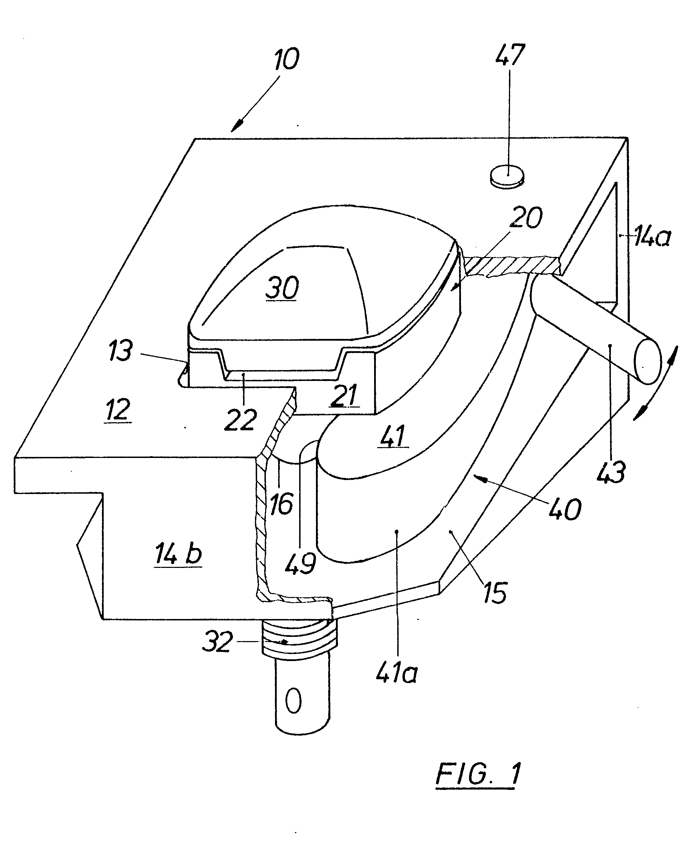

Die in der Zeichnung dargestellte Container-Befestigungsvorrichtung besitzt ein beispielsweise aus Stahlguß hergestelltes kastenförmiges Gehäuse 10 mit einer oberseitigen ebenen Aufstandsfläche 12 zum Aufsetzen eines nicht dargestellten Eckbeschlages eines Containers. In dieser Aufstandsfläche 12 befindet sich ein länglicher Durchbruch 13, durch den ein äußerlich ähnlich profiliertes Widerlager 20 vertikal verschiebbar ist. Im Betrieb greift dieses Widerlager 20 in einen entsprechenden Durchbruch des Container-Eckbeschlages ein, und ein mit seinem Gewindeschaft 32 eine Bohrung 25 im Widerlager 20 durchragender Riegelbolzen mit Spannkopf 30 läßt sich gegenüber dem Widerlager 20 aus der in Fig. 1 dargestellten Position um 90° verdrehen, um den Container-Eckbeschlag fest mit der Befestigungsvorrichtung zu koppeln. In diesem gekoppelten Zustand wird der Spannkopf durch eine nicht dargestellte Mutter auf dem Gewindeschaft 32 nach unten gezogen und zieht seinerseits den Eckbeschlag des Containers fest gegen die Aufstandsfläche 12.

Außer der die Aufstandsfläche 12 bildenden Oberwand besitzt das Gehäuse 10 zwei Seitenwände 14a, 14b und eine untere Abschlußwand 15 mit einem kreisrunden Durchbruch 16, welcher in der Absenkstellung von einem Hohlzapfen 24 des in der Seitenansicht T-förmigen Widerlagers 20 durchsetzt ist. Das Widerlager 20 besitzt einen in seinem Grundriß im Querschnitt dem Durchbruch 13 im Gehäuse 10 entsprechenden Kopf 21 mit einer Aufnahmevertiefung 22, in den bei der Stellung gemäß Fig. 1 ein entsprechend geformter Ansatz auf der Unterseite des Spannkopfes 30 eingreift. Im Hohlzapfen 24 befindet sich eine Bohrung 25 zur Aufnahme des Gewindeschaftes 32, und unterhalb des Kopfes 21 befindet sich eine Stützfläche 26, deren Außenkanten mit einer Abrundung 28 bzw. Fase versehen sind.

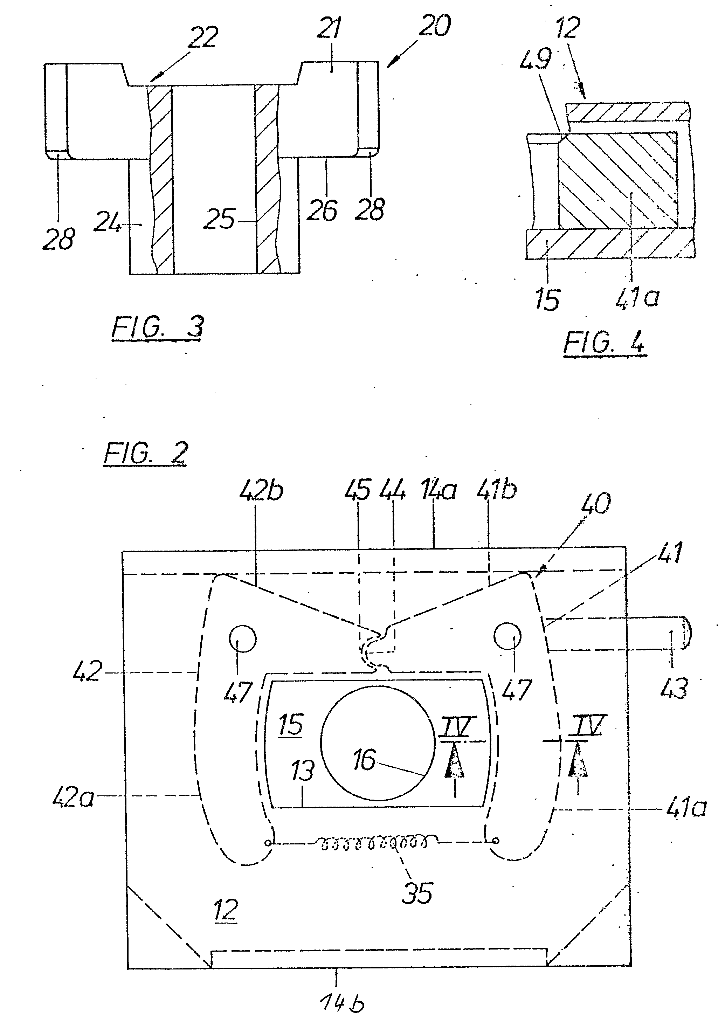

Zur Abstützung des Widerlagers 20 mit Riegelbolzen in dessen in Fig. 1 dargestellter angehobener Position dient eine Greiferzange 40 mit zwei im wesentlichen spiegelsymmetrisch L-förmig ausgebildeten Greifelementen, die im Ausführungsbeispiel als Greifbacken 41, 42 dargestellt und im Scheitelbereich des L um zwischen Oberwand und unterer Abschlußwand 15 des Gehäuses 10 sich erstreckende vertikale Stifte 47 drehbar gelagert sind. Jede Greifbacke 41 und 42 besitzt jeweils einen Greifschenkel 41a, 42a und einen Koppelschenkel 41b, 42b. Die beiden Koppelschenkel 41b und 42b sind durch eine Kupplungseinrichtung kinematisch miteinander gekoppelt, so daß beide Greifbacken 41 und 42 nur gemeinsam und gegenläufig um ihre Stifte 47 verdreht werden können. Diese Kupplungseinrichtung besteht aus einem abgerundeten Nocken 44 am Koppelschenkel 41b und einer komplementären Nut 45 am gegenüberliegenden Koppelschenkel 42b. Mit Hilfe eines im Scheitelbereich der Greifbacke 41 angesetzten und nach außen vorstehenden Handgriffes 43 lassen sich die beiden Greifbacken 41, 42 zwischen der in Fig. 1 dargestellten geschlossenen Stellung, welche der angehobenen Stellung des Widerlagers 20 entspricht, und der in Fig. 2 dargestellten geöffneten Stellung, wo die Innenkanten der Greifschenkel 41a, 42a etwa parallel zu den Außenkonturen des Durchbruches 13 in der Aufstandsfläche 12 verlaufen, hin- und herbewegen. In der geschlossenen Stellung der Greifzange 40 (Fig. 1) liegt das Widerlager 20 mit seiner unteren Stützfläche 26 auf den Oberseiten der Greifbacken 41 und 42 auf. In der geöffneten Stellung der Greifzange 40 (Fig. 2) liegt das in Fig. 2 nicht dargestellte Widerlager 20 mit seiner unteren Stützfläche 26 auf der unteren Abschlußwand 15 des Gehäuses auf, so daß jetzt das gesamte Widerlager 20 mit Riegelbolzen und Spannkopf 30 unter die Aufstandsfläche 12 abgesenkt ist.

Zur leichteren Bewegbarkeit der Greiferzange 40 gegenüber der normalerweise roh bearbeiteten Stützfläche 26 des Widerlagers 20 und umgekehrt sind die Innenkanten 49 der Greifbacken 41, 42 sowie die Außenkanten der Stützfläche 26 jeweils mit einer Fase bzw. Abrundung 49/28 versehen.

Die Stifte 47 können als elastisch vorgespannt eingesetzte Hohlniete o. dgl. ausgebildet sein.

## Patentansprüche

1. Container-Befestigungsvorrichtung mit einem Gehäuse (10), das eine Aufstandsfläche (12) für einen Eckbeschlag eines Containers aufweist, mit einem Durchbruch (13) in der Aufstandsfläche (12), in den ein unverdrehbar gehaltenes und von einer im Gehäuse (10) bewegbaren Abstützung tragbares Widerlager (20) eingreift, welches seinerseits von einem um seine Längsachse verdrehbaren Riegelbolzen (30, 32) durchsetzt und zusammen mit diesem in axialer Richtung unter die Aufstandsfläche (12) bis gegen einen Anschlag (15) absenkbar ist, dadurch gekennzeichnet, daß die Abstützung aus einer horizontal im Gehäuse (10) angeordneten Greiferzange (40) besteht, deren Greifelemente (41, 42) relativ zueinander aus einer Trag- in eine Absenkstellung bewegbar sind, in der ihr lichter Abstand eine das Absenken des Widerlagers (20) gestattende Größe hat.

2. Vorrichtung nach Anspruch 1, dadurch gekennzeichnet, daß die Greifelemente (41, 42) das Widerlager (20) in dessen angehobener Stellung untergreifen.

3. Vorrichtung nach Anspruch 2, dadurch gekennzeichnet, daß die Greifelemente (41, 42) auf einer zur Aufstandsfläche (12) parallelen Stützfläche (15) aufliegen.

4. Vorrichtung nach mindestens einem der vorstehenden Ansprüche, dadurch gekennzeichnet, daß zwei Greifelemente (41, 42) vorgesehen sind.

5. Vorrichtung nach mindestens einem der vorstehenden Ansprüche, dadurch gekennzeichnet, daß jedes Greifelement (41, 42) gegenüber dem Gehäuse (10) um eine separate vertikale Achse (47) verdrehbar ist.

6. Vorrichtung nach Anspruch 4 oder 5, dadurch gekennzeichnet, daß die Greifelemente (41, 42) über eine Mitnehmerkupplung (44, 45) miteinander verbunden sind.

7. Vorrichtung nach Anspruch 6, dadurch gekennzeichnet, daß die Kupplung durch eine ineinander eingreifende Nocken-Nut-Kombination (44, 45) gebildet ist.

8. Vorrichtung nach mindestens einem der vorstehenden Ansprüche, dadurch gekennzeichnet, daß die Greifelemente (41, 42) im wesentlichen L-förmig gestaltet sind.

9. Vorrichtung nach den Ansprüchen 5 und 8, dadurch gekennzeichnet, daß sich die vertikale Achse (47) im Scheitelpunkt des L befindet.

10. Vorrichtung nach Anspruch 8, dadurch gekennzeichnet, daß die L-Schenkel (41a, b, 42a, b) so geformt sind, daß der von den Greifelementen in ihrer geöffneten Stellung umschlossene Profilraum im wesentlichen mit dem lotrechten Durchbruch (13) in der Aufstandsfläche (12) übereinstimmt.

11. Vorrichtung nach mindestens einem der vorstehenden Ansprüche, dadurch gekennzeichnet, daß die Greifelemente (41, 42) durch eine Feder (35) in Richtung ihrer Tragstellung vorgespannt sind.

12. Vorrichtung nach mindestens einem der vorstehenden Ansprüche, dadurch gekennzeichnet, daß eines der Greifelemente (z. B. 41) mit einem Handgriff (43) versehen ist.

13. Vorrichtung nach mindestens einem der vorstehenden Ansprüche, dadurch gekennzeichnet, daß mindestens eine innen liegende Kante (49) eines Greifelements und/oder eine außen liegende Kante (28) des Widerlagers (20) angefaßt bzw. abgerundet ist.

## Claims

1. A container securing device comprising a housing (10) which has a support surface (12) for a corner fitment of a container, with an aperture (13) in the support surface (12), into which aperture engages a non-rotatably held support member (20) which can be carried by a support means which is movable in the housing (10), a locking pin (30, 32) which is rotatable about its longitudinal axis in turn extending through the support member (20) and the support member, together with the locking pin, being movable downwardly in an axial direction below the support surface (12) to a position against an abutment means (15), characterised in that the support means comprises a gripping tongs means (40) which is arranged horizontally in the housing (10) and whose gripping elements (41, 42) are movable relativ to each other from a carrying position into a lowered position in which the internal spacing thereof is of a size which permits the downward movement of the support member (20).

2. A device according to claim 1 characterised in that the gripping elements (41, 42) engage under the support member (20) in the raised position of the support member.

3. A device according to claim 2 characterised in that the gripping elements (41, 42) lie on a supporting face (15) which is parallel to the support surface (12).

4. A device according to at least one of the preceding claims characterised in that there are provided two gripping elements (41, 42).

5. A device according to at least one of the preceding claims characterised in that each gripping element (41, 42) is rotatable relative to the housing (10) about a separate vertical axis (47).

6. A device according to claim 4 or claim 5 characterised in that the gripping elements (41, 42) are connected together by way of an entrainment coupling means (44, 45).

7. A device according to claim 6 characterised in that the coupling means is formed by an interengaging projection-and-groove combination (44, 45).

8. A device according to at least one of the preceding claims characterised in that the gripping elements (41, 42) are of substantially L-shaped configuration.

9. A device according to claims 5 and 8 characterised in that the vertical axis (47) is disposed at the apex of the L-shape.

10. A device according to claim 8 characterised in that the limb portions (41a, b, 42a, b) of the L-shape are so shaped that the space enclosed by the gripping elements in the open position thereof is substantially identical to the perpendicular aperture (13) in the support surface (12).

11. A device according to at least one of the preceding claims characterised in that the gripping elements (41, 42) are biassed towards their carrying position by a spring (35).

12. A device according to at least one of the preceding claims characterised in that one of the gripping elements (eg 41) is provided with a handle (43).

13. A device according to at least one of the preceding claims characterised in that at least an inwardly disposed edge (49) of a gripping element and/or an outwardly disposed edge (28) of the support member (20) is chamferred or rounded off.

## Revendications

1. Dispositif pour la fixation de conteneurs, comportant un carter (10) muni d'une face d'appui (12) pour une ferrure d'angle d'un conteneur, une ouverture (13) dans la face d'appui (12), dans laquelle s'engage un contre-appui (20) immobilisé en rotation et apte à être porté par un support déplaçable dans le carter (10) et qui, de son côté, est traversé par une tige de verrouillage (30,32) pouvant tourner sur son axe longitudinal et peut, avec cette tige, être abaissé par déplacement axial audessous de la face d'appui (12) jusqu'à ce qu'il rencontre une butée (15) caractérisé en ce que le support est constitué par une pince (40) disposée horizontalement dans le carter (10), dont les éléments de préhension (41, 42) peuvent être déplacés l'un relativement à l'autre d'une position de support à une position d'abaissement, dans laquelle la distance qui les sépare a une grandeur qui permet l'abaissement du contre-appui (20).

2. Dispositif selon la revendication 1, caractérisé en ce que les éléments de préhension (41, 42) saisissent le contre-appui (20) par dessous dans sa position haute.

3. Dispositif selon la revendication 2, caractérisé en ce que les éléments de préhension (41, 42) reposent sur une face de support (15) parallèle à la face d'appui (12).

4. Dispositif selon l'une au moins des revendications précédentes, caractérisé en ce qu'il est prévu deux éléments de préhension (41, 42).

5. Dispositif selon l'une au moins des revendications précédentes, caractérisé en ce que chaque élément de préhension peut pivoter relativement au carter (10) autour d'un axe vertical (47) séparé.

6. Dispositif selon la revendication 4 ou la revendication 5, caractérisé en ce que les éléments de préhension (41, 42) sont reliés entre eux par un accouplement d'entraînement.

7. Dispositif selon la revendication 6, caractérisé en ce que l'accouplement est formé par la combinaison d'une saillie (44) engagée dans une rainure (45).

8. Dispositif selon l'une au moins des revendications précédentes, caractérisé en ce que les éléments de préhension (41, 42) ont, pour l'essentiel, la forme d'un L.

9. Dispositif selon les revendications 5 et 8, caractérisé en ce que l'axe vertical (47) se trouve au sommet de l'angle du L.

10. Dispositif selon la revendication 8, caractérisé en ce que les branches du L (41a, 41b, 42a, 42b) sont conformées de façon que le profil de l'espace circonscrit par les éléments de préhension dans leur position d'ouverture corresponde pour l'essentiel à l'ouverture (13) qui traverse verticalement la face d'appui (12).

11. Dispositif selon au moins une des revendications précédentes, caractérisé en ce que les éléments de préhension (41, 42) sont sollicités par un ressort (35) vers leur position de support.

12. Dispositif selon l'une au moins des revendications précédentes, caractérisé en ce qu'un des éléments de préhension (par exemple 41) est muni d'une poignée (43).

13. Dispositif selon l'une au moins des revendications précédentes, caractérisé en ce qu'au moins une arête intérieure (49) d'un élément de préhension et/ou une arête extérieure (28) du contre-appui (20) est chanfreinée ou arrondie.

FIG. 1

_FIG. 3_

_FIG. 4_

_FIG. 2_